# EUROPÄISCHE PATENTSCHRIFT

(11) **EP 1 241 908 B1**
(45) Veröffentlichungstag und Bekanntmachung des Hinweises auf die Patenterteilung: **03.12.2003**
(21) Anmeldenummer: 01106702.2
(22) Anmeldetag: 15.03.2001
(51) Int. Cl.: H04Q 7/38

(54) **Zuweisung von Übertragungskapazitäten in einem Funk-Kommunikationssystem mit Hilfe von adaptiven Antennen**
Assignment of transmission resources in a radio communications system by using adaptive antennas
Attribution des ressources de transmission dans un système de radiocommunications à l'aide des antennes adaptives

(43) Veröffentlichungstag der Anmeldung: 18.09.2002
(73) Patentinhaber: SIEMENS AKTIENGESELLSCHAFT, 80333 München (DE)
(72) Erfinder: Dold, Joachim, 10823 Berlin (DE); Gessner, Christina, 13587 Berlin (DE); Hillebrand, Frank, 13587 Berlin (DE); Kuipers, Martin, 13599 Berlin (DE); Lehmann, Gerald, 12101 Berlin (DE); Meiling, Axel, 13597 Berlin (DE); Papoutsis, Georgios, 10719 Berlin (DE); Plogsties, Jens, 12524 Berlin (DE); Raji, Fariba, 10625 Berlin (DE); Schindler, Juergen, Dr., 10555 Berlin (DE); Schmitz, Heiko, Dr., 13347 Berlin (DE); Schniedenharn, Joerg, 13587 Berlin (DE); Wegner, Frank, 13407 Berlin (DE)

(56) Entgegenhaltungen:
- WO-A-00/51368
- WO-A-98/39945
- WO-A-99/33304

## Beschreibung

Die vorliegende Erfindung betrifft ein Verfahren zur Zuweisung von Übertragungskapazitäten zu einem Endgerät in einem Funk-Kommunikationssystem gemäß dem Oberbegriff des Patentanspruchs 1. Außerdem umfasst die Erfindung ein Basisstationssystem eines Funk-Kommunikationssystems gemäß dem Oberbegriff des Patentanspruchs 6.

Adaptive Antennen können in einer speziellen Betriebsweise insbesondere eine richtungsselektive Wirkung entfalten. Prinzipiell können richtungsselektiven Antennen z.B. derart ausgebildet sein, dass sie bereits durch die spezielle Ausbildung ihrer Sende-/Empfangskomponenten eine richtungsselektive Wirkung entfalten. Damit ist allerdings eine relativ geringe Anpassungsfähigkeit der Antennen an sich ändernde Positionen von sich bewegenden Endgeräten gegeben.

Eine verbesserte Möglichkeit bieten adaptive Antennen, die insbesondere eine richtungsselektive Wirkung durch eine geeignete Steuerung variieren können, beispielsweise durch eine geeignete Abstimmung mehrerer Sende-/Empfangskomponenten innerhalb einer Antenne aufeinander, also durch ein sogenanntes Beam Forming. Die Verwendung solcher Antennensysteme in Funk-Kommunikationssystemen ist beispielsweise aus EP 0 786 914 A2 mit Bezugnahme auf ein Richtungsmultiplex-Funksystem (Space Division Multiple Access SDMA) bekannt. Dort wird beschrieben, dass durch eine geeignete Gewichtung der empfangenen oder abgestrahlten Signale mehrerer Antennenelemente einer Antenne eine Abstandsmetrik für die einzelnen Endgeräte bestimmt wird. Nähert sich die so definierte Abstandsmetrik eines Endgeräts derart an diejenige eines anderen Endgerätes an, dass eine eindeutige Unterscheidung der beiden Abstandsmetriken nicht mehr möglich wird, so werden einem der Endgeräte neue Übertragungskapazitäten zur Verfügung gestellt oder ein Handover durchgeführt.

Nachteilig an einem solchen Verfahren ist jedoch, dass zwar für den aktuellen Versorgungszustand des Endgerätes in der versorgenden Sende-/Empfangseinrichtung in der Regel eine gewisse Kenntnis über die optimale Konfiguration der Antennen zur Versorgung des Endgerätes vorliegt, dieses Wissen aber nicht oder nur unvollständig für den Zustand nach der neu erfolgten Zuweisung der Übertragungskapazitäten insbesondere in einer anderen Sende-Empfangseinrichtung vorliegt. Damit kann also nach den aus dem Stand der Technik bekannten Verfahren nach der - beispielsweise im Rahmen eines Handovers - erfolgten Zuweisung von Übertragungskapazitäten eine Kommunikationsverbindung mit Hilfe von adaptiven Antennen, wie mittels so genanntem Beam Forming, nicht optimal, oder gar nur mangelhaft oder schlimmstenfalls gar nicht aufgebaut werden.

Aus WO 00/51368 ist ein Verfahren für einen Handover einer Mobilstation MS von einer ersten Basisstation an eine Zielbasisstation bekannt. Dabei wird netzseitig die Notwendigkeit eines Handover detektiert. Der Handover selbst wird in einem "mobile switching centers" MSC initiiert. Durch das "mobile switching center" MSC wird eine Zielbasisstation bestimmt, in der richtungsselektive Messungen veranlasst werden. Die Zielbasisstation bestimmt zur zukünftigen Versorgung der Mobilstation MS ein geeignetes, gerichtetes Strahlungsdiagramm und übernimmt mit Hilfe des gerichteten Strahlungsdiagramms nach dem Handover die Versorgung der Mobilstation MS.

Aus WO 99/33304 ist ein Handover-Verfahren in einem zellularen Mobilfunksystem bekannt. Dabei werden seitens einer Zielbasisstation Messungen zu Mobilteilnehmern aufgenommen, die von einer benachbarten Basisstation funkversorgt werden. Aus Uplink-Signalen werden von der Zielbasisstation Richtungsinformationen zu einer Vielzahl von Mobilteilnehmern gewonnen und nach einem durchgeführten Handover entsprechend geeignete Richtungsstrahlungsdiagramme zur Funkversorgung verwendet.

Aufgabe der vorliegenden Erfindung ist es daher, ein Verfahren und ein Basisstationssystem der eingangs genannten Art derart auszubilden, dass die Vorteile von adaptiven Antennen, insbesondere in ihrer Verwendung als richtungsselektive Antennen, möglichst optimal ausgenutzt werden können.

Diese Aufgabe wird gelöst durch die Merkmale der unabhängigen Patentansprüche.

Die Erfindung umfasst einerseits ein Verfahren zur Zuweisung von Übertragungskapazitäten zu einem Endgerät in einem Funk-Kommunikationssystem, wobei eine erste Sende-/Empfangseinrichtung eine Kommunikationsverbindung zu dem Endgerät mit Hilfe von adaptiven Antennen unterhält. Die adaptiven Antennen können dabei insbesondere eine richtungsselektive Kommunikationsverbindung zu dem Endgerät unterhalten. Dazu erfolgt beispielsweise eine Optimierung der Interferenz-Situation der Übertragungen von und zu dem Endgerät und eine geeignete Gewichtung der zu dem Endgerät ausgesandten Signale. Adaptive Antennen können aber auch in jedem anderen geeigneten Modus betrieben werden, der nicht unbedingt eine richtungsselektive Wirkung aufweisen muss.

Es wird also von einer bereits bestehenden Kommunikationsverbindung zu einem Endgerät ausgegangen. Es kann nun aus unterschiedlichen Gründen der Wunsch oder der Bedarf bestehen, dass in einem weiteren Verfahrensschritt diesem Endgerät erneut Übertragungskapazitäten zugewiesen werden, beispielsweise, weil sich die Übertragungsqualität der bestehenden Kommunikationsverbindung verschlechtert hat, oder z.B. aufgrund von anderen bestehenden Kommunikationsverbindungen niedrigerer oder höherer Priorität, die eine Neuzuordnung von Übertragungskapazitäten erfordern. Es werden sich für den Fachmann ohne weiteres noch weitere Kriterien erschließen, die eine solche Neuzuweisung erforderlich machen können.

Entsprechend der vorliegenden Erfindung ist nun vorgesehen, dass eine zweite Sende-/Empfangseinrichtung eine richtungsselektive Auswertung von Funksignalen durchführt, welche von dem Endgerät ausgesandt wurden, auf Basis dieser Auswertung eine Zuweisung von Übertragungskapazitäten zu dem Endgerät durchführt und mit Hilfe von adaptiven Antennen eine Kommunikationsverbindung zu dem Endgerät aufbaut. Auch hier kann vorgesehen werden, dass mittels der adaptiven Antennen eine richtungsselektive Kommunikationsverbindung zu dem Endgerät aufgebaut wird. Es kann folglich eine Zuweisung von Übertragungskapazitäten erfolgen, unabhängig von den Kenntnissen, die in der ersten Sende-/Empfangseinrichtung über die Konfiguration der Kommunikationsverbindung zu dem Endgerät vorliegen. Es kann somit auf einfache Weise einzig auf der Basis der vom Endgerät ausgesandten Funksignale, die seitens der zweiten Sende-/Empfangseinrichtung empfangen werden, eine individuell abgestimmte Kommunikationsverbindung zu diesem Endgerät aufgebaut werden. Dabei sind als einziger Maßstab lediglich die Empfangsverhältnisse in der zweiten Sende-/Empfangseinrichtung maßgeblich.

Gerade weil aber die Zuweisung der Übertragungskapazitäten und der Aufbau der Kommunikationsverbindung in Abhängigkeit von diesen Empfangsverhältnissen gesteuert werden, können sie optimal auf die nach der Zuweisung der Übertragungskapazitäten gültigen Verhältnisse abgestimmt werden. Außerdem kann die Voraussetzung für eine solche optimale Zuweisung bereits zu einem sehr frühen Zeitpunkt geschaffen werden, da die zweite Sende-/Empfangseinrichtung bereits vor der Zuweisung der Übertragungskapazitäten mit der Auswertung der empfangenen Funksignale eine umfassende Kenntnis über die erforderlichen Anpassungen adaptiver Antennen - beispielsweise einer richtungsselektiven oder sonstigen gewünschten Wirkung dieser Antennen - erhält, um für das Endgerät nach der Zuweisung der Übertragungskapazitäten eine optimale Kommunikationsverbindung bereitstellen zu können. Im Gegensatz hierzu erlauben z.B. gerade Handover-Verfahren nach dem Stand der Technik eine Anpassung der Antenneneinstellungen erst nach einer erfolgten Zuweisung von Übertragungskapazitäten, was die Gefahr einer unzureichenden Versorgung des Endgerätes, zusätzlicher Interferenzen im Kommunikationssystem und einer zeitaufwändigen Handover-Prozedur oder gar eines ungewollten Abbruches der Handover-Prozedur mit sich bringt.

Es bietet sich der Einsatz des erfindungsgemäßen Verfahrens gerade für die Zuweisung von Übertragungskapazitäten im Rahmen eines Handovers von einer ersten Sende-/Empfangseinrichtung zu einer zweiten Sende-/Empfangseinrichtung an. Gerade in einem solchen Fall hat die zweite Sende-/Empfangseinrichtung nach den bisherigen Verfahren vor dem Handover des Endgerätes keine ausreichende Kenntnis, um mit Hilfe von adaptiven Antennen in optimaler Weise eine Kommunikationsverbindung zu dem Endgerät aufbauen zu können. Durch eine Auswertung der empfangenen Funksignale bereits vor dem Handover kann jedoch bereits eine optimale Anpassung der adaptiven Antennen,für die aufzubauende Kommunikationsverbindung erfolgen. So können für den Fall des Beam Forming die notwendigen Ansteuerungen der Antennenelemente und Gewichtungen der Signale bestimmt werden, die eine optimale Antennenabstrahlung erlauben. Zusätzlich kann gegebenenfalls bereits vor dem Handover die Position des Endgerätes ermittelt werden, die wiederum für die Antennenanpassung oder auch für sonstige Verfahren und Algorithmen verwendet werden kann, die von der Position des Endgerätes beeinflusst werden. Gegebenenfalls kann auch die Handover-Entscheidung auf Basis der Auswertung der empfangenen Funksignale nochmals überprüft werden und gerade für einen Fall nicht ausreichender Versorgung durch die zweite Sende-/Empfangseinrichtung die Einleitung der Handover-Prozedur verhindert werden. Damit werden die gesamten Abläufe im Kommunikationssystem effektiver gestaltet und unnötige Signalisierungsabläufe vermieden.

Die richtungsselektive Auswertung kann grundsätzlich durch jede geeignete Methode erfolgen, wobei z.B. richtungsselektive Einrichtungen oder geeignete Verfahrensschritte für eine Richtungsselektion vorgesehen werden können. Insbesondere kann die zweite Sende-/Empfangseinrichtung mit Hilfe von adaptiven Antennen eine richtungsselektive Auswertung der Funksignale durchführen, welche von dem Endgerät ausgesandt wurden. Dies hat den Vorteil, dass keine zusätzlichen Einrichtungen in der zweiten Sende-/Empfangseinrichtung notwendig sind, da die richtungsselektive Funktionalität der adaptiven Antennen insbesondere auch für den Aufbau einer richtungsselektiv optimierten Kommunikationsverbindung zu dem Endgerät vorgesehen werden kann.

Es ist nun in der Regel nicht wünschenswert, dass eine Sende-/Empfangseinrichtung ständig die ausgesandten Funksignale aller Endgeräte für eine richtungsselektive Auswertung überwacht, die sich in Reichweite der Funksignale befinden. Um einen unnötigen Datenverarbeitungsaufwand in den Sende-/Empfangseinrichtungen zu vermeiden, wird daher vorgesehen, dass die Auswertung der vom Endgerät ausgesandten Funksignale durch ein geeignetes Ereignis initiiert wird, das den notwenigen Datenverarbeitungsaufwand auf ein vertretbares Maß beschränkt. So kann vorgesehen werden, dass die Auswertung der vom Endgerät ausgesandten Funksignale durch eine Signalisierung seitens des Funk-Kommunikationssystems an die zweite Sende-/Empfangseinrichtung initiiert wird. Es können im Rahmen einer solchen Signalisierung auch zusätzliche Daten, die bereits an einer bestimmten Stelle im Funk-Kommunikationssystem vorhanden sind und für die zweite Sende-/Empfangseinrichtung bei den abzuwickelnden Verfahrensschritten hilfreich sein können, an die zweite Sende-/Empfangseinrichtung übertragen werden. Solche Daten können beispielsweise Informationen über die Parameter der bereits bestehenden Kommunikationsverbindung zwischen dem Endgerät und der ersten Sende-/Empfangseinrichtung darstellen. So kann z.B. die Signalisierung Informationen über einen bevorstehenden Handover des Endgerätes zu der zweiten Sende-/Empfangseinrichtung enthalten. Die zweite Sende-/Empfangseinrichtung kann aufgrund dieser Informationen bereits vor einem erfolgten Handover auf Basis der richtungsselektiven Auswertung Vorbereitungen für einen optimalen Aufbau einer Kommunikationsverbindung treffen, indem die adaptiven Antennen bereits entsprechend eingerichtet werden.

Erfindungsgemäß ist vorgesehen, dass die Auswertung der vom Endgerät ausgesandten Funksignale durch eine Signalisierung seitens des Endgeräts an die zweite Sende-/Empfangseinrichtung initiiert wird. In einem solchen Fall erhält das Endgerät selbst mehr Möglichkeiten zur Einflussnahme auf die Zuweisung von Übertragungskapazitäten, insbesondere auf eine Handover-Entscheidung. Da das Endgerät die beste und aktuellste Kenntnis über die bestehenden Empfangsverhältnisse am Ort des Endgerätes besitzt, kann eine solche Initiierung durch das Endgerät zur effektiveren Abwicklung des gesamten Verfahrens beitragen. Auch hier kann die Signalisierung Daten enthalten, die die notwendigen Verfahrensschritte in der zweiten Sende-/Empfangseinrichtung unterstützen oder auch lenken können. Insbesondere kann die Signalisierung eine Handover-Anforderung des Endgerätes an die zweite Sende-/Empfangseinrichtung enthalten. Das Endgerät kann in einem solchen Fall selbst den Wunsch für einen Handover anzeigen und so die Handover-Prozeduren, möglicherweise auf Basis besserer Kenntnisse über die aktuellen Empfangsverhältnisse, selbst beginnen.

Es muss für die vorstehend beschriebenen erfindungsgemäßen Verfahrensschritte lediglich gewährleistet sein, dass die Signalisierung für die zweite Sende-/Empfangseinrichtung erkennbar macht, dass eine richtungsselektive Auswertung erfolgen soll. Es kann beispielsweise eine für die Initiierung der Auswertung eindeutige Datensequenz verwendet werden, d.h. es wird eine spezielle Datensequenz lediglich für diesen Zweck vorgesehen, was es für die zweite Sende-/Empfangseinrichtung sehr einfach macht, die anstehende Auswertung zu erkennen.

Es kann andererseits aber auch vorgesehen werden, dass eine Datensequenz verwendet wird, die auch im Rahmen einer anderen Signalisierung in dem Kommunikationssystem verwendet wird. Die Datensequenz ist damit nicht mehr aus sich heraus eindeutig, die Bedeutung als Auslöser für die Auswertung muss sich dann aus dem speziellen Zusammenhang der Verwendung oder durch andere Erkennungsmechanismen ergeben. Hierzu kann insbesondere vorgesehen werden, dass als Signalisierung eine für einen Zugriff auf das Kommunikationssystem definierte Datensequenz verwendet wird.

Schließlich kann vorgesehen sein, dass die Auswertung der vom Endgerät ausgesandten Funksignale durch eine Zeitinformation initiiert wird. Eine solche Initiierung kann dann beispielsweise unabhängig von sonstigen Einheiten des Kommunikationssystems allein innerhalb einer Sende-/Empfangseinrichtung ablaufen, beispielsweise dadurch, dass eine Initiierung zu bestimmten Zeitpunkten oder nach bestimmten Zeitabständen erfolgen soll.

Weiterhin umfasst die vorliegende Erfindung ein Basisstationssystem eines Funk-Kommunikationssystems mit Einrichtungen zur Zuweisung von Übertragungskapazitäten zu einem Endgerät, wobei zumindest eine erste Sende-/Empfangseinrichtung adaptive Antennen aufweist. Das Basisstationssystem ist also dazu ausgebildet, durch zumindest eine Sende-/Empfangseinrichtung eine adaptive, beispielsweise eine richtungsselektive Kommunikationsverbindung zu einem Endgerät aufzubauen und zu unterhalten. Gemäß der vorliegenden Erfindung ist vorgesehen, dass zumindest eine zweite Sende-/Empfangseinrichtung folgendes aufweist:
- eine Einrichtung zur richtungsselektiven Auswertung von Funksignalen, welche von einem Endgerät ausgesandt wurden, wobei die richtungsselektive Auswertung durch das Endgerät bei der zweiten Sende-/Empfangseinrichtung initiiert wird,
- eine Einrichtung zur Zuweisung von Übertragungskapazitäten zu dem Endgerät und
- adaptive Antennen zum Aufbau einer Kommunikationsverbindung zu dem Endgerät.

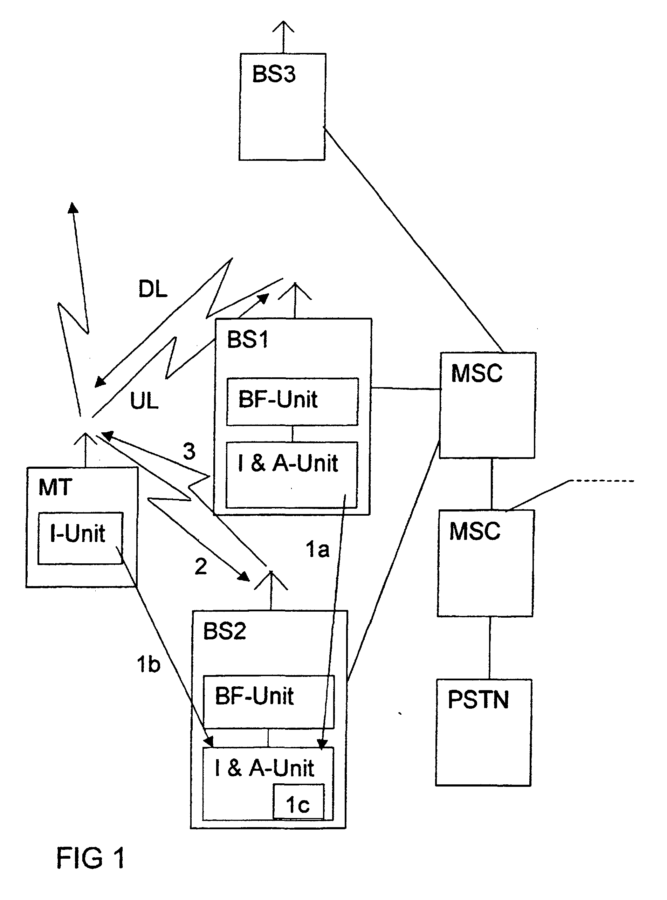

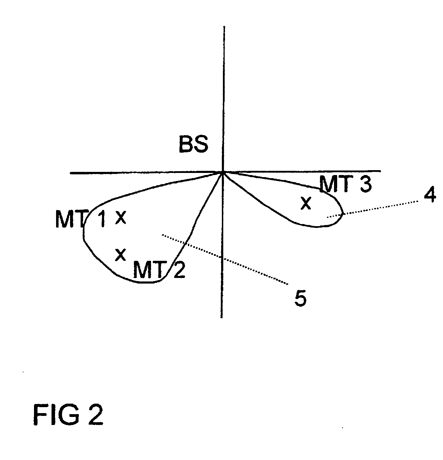

Ein spezielles Ausführungsbeispiel der Erfindung wird nachfolgend anhand der Figuren 1 und 2 erläutert, wobei hier die spezielle Verwendung adaptiver Antennen zum Aufbau richtungsselektiver Kommunikationsverbindungen betrachtet wird.

Es zeigen:
- Fig. 1:: Schematische Darstellung der erfindungsgemäßen Verfahrensabläufe in einem Funk-Kommunikationssystem
- Fig. 2:: Schematische Darstellung der richtungsselektiven Wirkung des Beam Forming

In Fig. 1 ist ein beispielhaftes Funk-Kommunikationssystem dargestellt, welches eine Vielzahl von Vermittlungseinrichtungen MSC aufweist, die miteinander verbunden sind. In der Regel bildet zumindest eine dieser Vermittlungseinrichtungen MSC einen Zugang zu weiteren Kommunikationssystemen wie beispielsweise einem Festnetz-Kommunikationssystem PSTN. An die Vermittlungseinrichtungen MSC sind verschiedene Basisstationen BS1, BS2, BS3 als Sende-/Empfangseinrichtungen des Funk-Kommunikationssystems angebunden. Die Basisstationen BS1, BS2, BS3 stehen über Kommunikationsverbindungen mit Endgeräten, speziell Teilnehmer-Endgeräten MT in Verbindung, wobei es sich im vorliegenden Fall um mobile Teilnehmer-Endgeräte MT handelt. Das Funk-Kommunikationssystem ist also als Mobilfunksystem ausgebildet, und es dient zum Aufbau und zur Unterhaltung von Kommunikationsverbindungen zu mobilen Endgeräten, die sich innerhalb des Funk-Kommunikationssystems bewegen können. Um dabei im Rahmen einer bestehenden Kommunikationsverbindung eine lückenlose Versorgung des Endgerätes durch das Funk-Kommunikationssystem zu garantieren, kann es notwendig werden, dass das Endgerät durch einen Handover von einer Basisstation BS1 zu einer benachbarten Basisstation BS2 wechselt.

Zwischen der in Fig. 1 dargestellten Basisstation BS1 und dem Teilnehmer-Endgerät besteht eine bidirektionale Kommunikationsverbindung mit einer Aufwärtsrichtung UL (Uplink) von dem Teilnehmer-Endgerät MT zur Basisstation BS1 und einer Abwärtsrichtung DL (Downlink) von der Basisstation BS1 zu dem Teilnehmer-Endgeräten MT. In der Aufwärtsrichtung UL erfolgt dabei in Mobilfunksystemen in der Regel keine richtungsselektive Aussendung der Daten, da die entsprechenden Endgeräte MT üblicherweise nicht mit richtungsselektiven Antennen ausgestattet sind. Dies ist auch in Fig. 1 schematisch angedeutet. Die vom Endgerät ausgesandten Daten können daher auch von einer benachbarten Basisstation BS2 empfangen werden, wenn diese sich in Reichweite der Funksignale befindet und keine Abschattung zwischen der Basisstation BS2 und dem Endgerät MT besteht.

In der Abwärtsrichtung DL ist dagegen für den vorliegenden Fall eine richtungsselektive Übertragung mit Hilfe von richtungsselektiven Antennen vorgesehen, deren Abstrahlcharakteristik durch Beam Forming gesteuert wird. Daher überträgt die Basisstation BS1 die Daten nur gezielt in Richtung des Endgerätes MT, wie in Fig. 1 angedeutet. Dies ist in Fig. 2 schematisch dargestellt. Eine Basisstation BS mit richtungsselektiven Antennen erzeugt mittels Beam Forming gerichtete Abstrahlcharakteristiken 4, 5, die dazu benutzt werden, Daten gezielt in die Richtung des aktuellen Aufenthaltsortes von Teilnehmerendgeräten MT1, MT2, MT3 zu übertragen. Solche Methoden sind beispielsweise aus dem eingangs zitierten Stand der Technik bekannt und werden über eine geeignete Gewichtung von Einzelsignalen einer Antenne aus mehreren einzelnen Antennenelementen realisiert. Die Basisstationen BS1, BS2 in Fig. 1 weisen dazu eine vereinfacht als Beam Forming Unit (BF-Unit) bezeichnete Einrichtung auf, die mittels spezieller Beam Forming Algorithmen die optimalen Abstrahlcharakteristika der richtungsselektiven Antennen der Basisstationen BS1, BS2 bestimmen. Mit Hilfe einer solchen richtungsselektiven Übertragung können insbesondere störende Einflüsse der Übertragung zu dem Endgerät MT auf andere bestehende Kommunikationsverbindungen im Mobilfunknetz, speziell aufgrund von Interferenzen, minimiert werden. Allerdings besitzt grundsätzlich nur diejenige Basisstation BS1, zu der aktuell ein Endgerät MT eine Kommunikationsverbindung unterhält, über die Kenntnisse, mit welchen Parametern das Beam Forming zu erfolgen hat, um dieses Endgerät optimal zu versorgen. Andere Basisstationen BS2, BS3, die eventuell zu einem späteren Zeitpunkt im Rahmen eines Handovers als versorgende Basisstationen genutzt werden müssen, besitzen nach den üblichen Verfahren keine Kenntnis über die optimalen Beam Forming Parameter für eine richtungsselektive Kommunikationsverbindung von der jeweiligen Basisstation BS2, BS3 zum Endgerät MT.

Entsprechen dem vorgeschlagenen Verfahren analysiert nun jedoch auch die benachbarte Basisstation BS2 in einem Verfahrensschritt 2 die in der Aufwärtsrichtung UL übertragenen Daten des Endgerätes MT. Die Basisstation BS2 bestimmt im Rahmen einer Auswertung, die durch eine entsprechende Einrichtung - in Fig. 1 schematisch als Initiation and Analysation Unit, I&A-Unit bezeichnet - erfolgt, eine Abstrahlcharakteristik für die richtungsselektiven Antennen der Basisstation BS2, mit der eine richtungsselektive Kommunikationsverbindung zu dem Endgerät MT aufgebaut werden könnte. Dies geschieht, noch bevor eine Kommunikationsverbindung zum Endgerät MT tatsächlich aufgebaut wird. Die Basisstation BS2 verschafft sich dadurch bereits vor der Notwendigkeit eines Verbindungsaufbaus zu dem Endgerät MT die erforderlichen Kenntnisse, um bei einem anschließend erfolgenden Verbindungsaufbau direkt eine optimale richtungsselektive Kommunikationsverbindung zu dem Endgerät MT etablieren zu können. Die hier schematisch als Initiation and Analysation Unit, I&A-Unit bezeichnete Einrichtung kann auch durch mehrere getrennte Einrichtungen realisiert werden, die funktionell den Erfordernissen der Auswertung der empfangenen Funksignale sowie einer im folgenden beschriebenen möglichen Initiierung dieser Auswertung gerecht werden.

Die Auswertung kann durch eine Signalisierung 1a seitens der ursprünglich das Endgerät MT versorgenden Basisstation BS1 an die I&A-Unit erfolgen, wobei die Signalisierung Informationen über einen bevorstehenden Handover des Endgerätes MT zu der Basisstation BS2, gegebenenfalls auch Positionsdaten des Endgerätes MT sowie weitere hilfreiche Informationen enthalten. Erfindungsgemäß erfolgt eine Initiierung durch eine Signalisierung 1b seitens des Endgerätes MT, die durch eine Einrichtung des Endgerätes MT gesteuert wird, welche in Fig. 1 schematisch als Initiation Unit, I-Unit, bezeichnet wurde. Auch diese Einrichtung kann innerhalb des Endgerätes MT durch jede geeignete technische Komponente realisiert werden, die eine solche Initiierung steuern kann. Die Signalisierung des Endgerätes MT kann dabei beispielsweise Informationen über einen Handover-Wunsch des Endgerätes MT enthalten, der z.B. auf aktuellen Messungen der Empfangsverhältnisse am Aufenthaltsort des Endgerätes MT basieren kann. Als Signalisierung seitens des Endgerätes MT können entweder spezielle, für diese Initiierung eindeutige Datensequenzen verwendet werden, oder es werden beispielsweise auch im Rahmen anderer Signalisierungen verwendete Datensequenzen benutzt, beispielsweise Sequenzen aus den Random Access Prozeduren RACH des Mobilfunknetzes. Dies kann z.B. dann vorgesehen werden, wenn im Mobilfunknetz zweistufige Random Access Prozeduren vorgesehen sind, bei denen der Erstzugriff im allgemeinen mit einer kurzen Signalisierungssequenz beginnt. Spezielle Erkennungsmechanismen der Initiation and Analysation Unit, I&A-Unit identifizieren dann die empfangene Signalisierung als Initiierung einer Auswertung und gerade nicht als übliche Random Access Sequenz innerhalb einer Random Access Prozedur. Unter Umständen kann die Basisstation BS2 sogar bereits aus der Signalisierung 1b die notwendigen Informationen gewinnen, um eine geeignete Richtcharakteristik zu bestimmen, ohne weitere Funksignale in der Aufwärtsrichtung UL des Endgerätes MT auswerten zu müssen. Die Signalisierung 1a bzw. 1b wird auf den üblichen Übertragungswegen im Mobilfunknetz von der Basisstation BS1 bzw. dem Endgerät MT zu der Basisstation BS2 übertragen. In Fig. 1 ist diese Übertragung nur schematisch durch Pfeile zwischen den entsprechenden Einheiten dargestellt.

Es kann auch vorgesehen sein, dass gesteuert durch geeignete Zeitsignale 1c, die im Beispiel nach Fig. 1 in der Basisstation BS2 selbst erzeugt werden, die Basisstation BS2 zu gewissen Zeitpunkten oder in regelmäßigen Zeitabständen die Funksignale des Endgerätes MT auswertet. In diesem Fall wird die Basisstation idealerweise nicht nur die Funksignale eines Endgerätes MT, sondern auch die Funksignale weiterer Endgeräte auswerten, die sich in Reichweite der Funksignale befinden.

Das Ergebnis der Auswertung der empfangenen Funksignale des Endgerätes MT durch die Basisstation BS2 kann auch als weiteres Entscheidungskriterium für einen Handover des Endgerätes MT von der Basisstation BS1 zu der Basisstation BS2 herangezogen werden, da insbesondere mögliche Abschattungsprobleme auf diese Weise überprüft werden können.

Auf Basis des Ergebnisses der erfolgten Auswertung kann dann bei der Einleitung eines Handovers des Endgerätes MT von der Basisstation BS1 zu der Basisstation BS2 die Basisstation BS2 bereits von Beginn an in einem Verfahrensschritt 3 mit einer optimalen Richtcharakteristik eine Kommunikationsverbindung zu dem Endgerät MT aufbauen, wiederum gesteuert durch die Beam Forming Unit BF-Unit. Die notwendigen Übertragungskapazitäten zum Aufbau der Kommunikationsverbindung 3 werden dem Endgerät MT durch eine entsprechende Einrichtung innerhalb der Basisstation BS2 zugewiesen. Aus Gründen der Vereinfachung wurde in Fig. 1 eine Darstellung gewählt, in der diese Einrichtung zur Zuweisung der Übertragungskapazitäten ebenfalls von der Beam Forming Unit BF-Unit umfasst wird. Es kann diese Zuweisung von Übertragungskapazitäten jedoch auch in einer separaten Einrichtung erfolgen, die von der Funktionalität des reinen Beam Forming getrennt ist.

## Patentansprüche

1. Verfahren zur Zuweisung von Übertragungskapazitäten zu einem Endgerät (MT) in einem Funk-Kommunikationssystem, wobei eine erste Sende-/Empfangseinrichtung (BS1) eine Kommunikationsverbindung zu dem Endgerät (MT) mit Hilfe von adaptiven Antennen unterhält, bei dem eine zweite Sende-/Empfangseinrichtung (BS2) mit Hilfe von adaptiven Antennen eine richtungsselektive Auswertung von Funksignalen (2) durchführt, welche von dem Endgerät (MT) ausgesandt wurden, auf Basis dieser Auswertung eine Zuweisung von Übertragungskapazitäten zu dem Endgerät durchführt und mit Hilfe von adaptiven Antennen eine Kommunikationsverbindung (3) zu dem Endgerät (MT) aufbaut,
**dadurch gekennzeichnet,**
**dass** die Auswertung der vom Endgerät (MT) ausgesandten Funksignale (3) durch eine Signalisierung (1b) seitens des Endgeräts (MT) an die zweite Sende-/Empfangseinrichtung (BS2) initiiert wird.

2. Verfahren nach Anspruch 1,
**dadurch gekennzeichnet,**
**dass** die Zuweisung von Übertragungskapazitäten im Rahmen eines Handovers von der ersten Sende-/Empfangseinrichtung (BS1) zu der zweiten Sende-/Empfangseinrichtung (BS2) erfolgt.

3. Verfahren nach Anspruch 1 oder 2,
**dadurch gekennzeichnet,**
**dass** die Signalisierung (1b) eine Handover-Anforderung des Endgerätes (MT) an die zweite Sende-/Empfangseinrichtung (BS2) enthält.

4. Verfahren nach einem der vorhergehenden Ansprüche,
**dadurch gekennzeichnet,**
**dass** als Signalisierung (1b) eine für die Initiierung der Auswertung eindeutige Datensequenz verwendet wird.

5. Verfahren nach einem der Ansprüche 1 bis 3,
**dadurch gekennzeichnet,**
**dass** als Signalisierung (1b) eine für einen Zugriff auf das Funk-Kommunikationssystem definierte Datensequenz verwendet wird.

6. Basisstationssystem zur Durchführung des Verfahrens nach einem der Ansprüche 1 bis 5,
- mit Einrichtungen zur Zuweisung von Übertragungskapazitäten zu einem Endgerät (MT),
- mit zumindest einer ersten Sende-/Empfangseinrichtung (BS1), die adaptive Antennen aufweist,
- bei der zumindest eine zweite Sende-/Empfangseinrichtung (BS2) folgendes aufweist:
- eine Einrichtung (I&A-Unit) zur richtungsselektiven Auswertung von Funksignalen (2), welche von einem Endgerät (MT) ausgesandt wurden, wobei die richtungsselektive Auswertung seitens des Endgeräts initiiert wird,
- eine Einrichtung (BF-Unit) zur Zuweisung von Übertragungskapazitäten zu dem Endgerät (MT) und
- adaptive Antennen zum Aufbau einer Kommunikationsverbindung (3) zu dem Endgerät (MT).

## Claims

1. Method for allocation of transmission capacities to a terminal (MT) in a radio communications system, with a first transmitting/receiving device (BS1) maintaining a communication link to the terminal (MT) with the aid of adaptive antennas, in which a second transmitting/receiving device (BS2) carries out a directionally selective. evaluation of radio signals (2) with the aid of adaptive antennas, with these radio signals having been sent from the terminal (MT), allocating transmission capacities to the terminal on the basis of this evaluation, and setting up a communication link (3) to the terminal (MT) with the aid of adaptive antennas,
**characterized**
**in that** the evaluation of the radio signals (3) which are sent from the terminal (MT) is initiated by signalling (1b) from the terminal (MT) to the second transmitting/receiving device (BS2).

2. Method according to Claim 1,
**characterized**
**in that** the allocation of transmission capacities is carried out in the course of a handover from the first transmitting/receiving device (BS1) to the second transmitting/receiving device (BS2).

3. Method according to Claim 1 or 2,
**characterized**
**in that** the signalling (1b) includes a handover request from the terminal (MT) to the second transmitting/receiving device (BS2).

4. Method according to one of the preceding claims,
**characterized**
**in that** a data sequence which is unique for initiation of the evaluation is used for the signalling (1b).

5. Method according to one of Claims 1 to 3,
**characterized**
**in that** a data sequence which is defined for access to the radio communications system is used for the signalling (1b).

6. Base station system for carrying out the method according to one of Claims 1 to 5,
- having devices for allocation of transmission capacities to a terminal (MT),
- having at least one first transmitting/receiving device (BS1), which has adaptive antennas,
- in which at least one second transmitting/receiving device (BS2) has the following:
- a device (I&A unit) for directionally selective evaluation of radio signals (2) which have been sent from a terminal (MT), with the directionally selective evaluation being initiated by the terminal,
- a device (BF unit) for allocation of transmission capacities to the terminal (MT), and
- adaptive antennas for setting up a communication link (3) to the terminal (MT).

## Revendications

1. Procédé d'attribution de capacités de transmission à un terminal (MT) dans un système de radiocommunications, un premier dispositif d'émission/réception (BS1) entretenant une liaison de communication vers le terminal (MT) à l'aide d'antennes adaptatives, dans lequel un deuxième dispositif d'émission/réception (BS2) exécute, à l'aide d'antennes adaptatives, une évaluation sélective de direction de signaux radio (2), lesquels ont été émis par le terminal (MT), réalise, sur la base de cette évaluation, une attribution de capacités de transmission vers le terminal et établit une liaison de communication (3) vers le terminal (MT) à l'aide d'antennes adaptatives,
**caractérisé en ce que**
l'évaluation des signaux radio (3) émis par le terminal (MT) est initiée par une signalisation (1b) du côté du terminal (MT) au deuxième dispositif d'émission/réception (BS2).

2. Procédé selon la revendication 1,
**caractérisé en ce que**
l'attribution de capacités de transmission est réalisée dans le cadre d'un transfert du premier dispositif d'émission/réception (BS1) vers le deuxième dispositif d'émission/réception (BS2).

3. Procédé selon la revendication 1 ou 2,
**caractérisé en ce que**
la signalisation (1b) comprend une demande de transfert du terminal (MT) au deuxième dispositif d'émission/réception (BS2).

4. Procédé selon l'une quelconque des revendications précédentes,
**caractérisé en ce qu'**une séquence de données univoque pour l'initiation
de l'évaluation est utilisée comme signalisation (1b).

5. Procédé selon l'une quelconque des revendications 1 à 3,
**caractérisé en ce que**
une séquence de données définie pour un accès au système de
radiocommunications est utilisée comme signalisation (1b).

6. Système de stations de base pour la réalisation du procédé selon l'une quelconque des revendications 1 à 5.
- comprenant des dispositifs d'attribution de capacités de transmission à un terminal (MT),
- comprenant au moins un premier dispositif d'émission/réception (BS1) qui présente des antennes adaptatives,
- dans lequel au moins un deuxième dispositif d'émission/réception (BS2) présente les éléments suivants :
- un dispositif (I&A-Unit) pour l'évaluation sélective de direction de signaux radio (2), lesquels ont été émis par un terminal (MT), l'évaluation sélective de direction étant initiée du côté du terminal,
- un dispositif (BF-Unit) d'attribution de capacités de transmission au terminal (MT) et
- des antennes adaptatives pour l'établissement d'une liaison de communication (3) vers le terminal (MT).
